# EUROPÄISCHE PATENTSCHRIFT

(11) **EP 3 603 898 B1**
(45) Veröffentlichungstag und Bekanntmachung des Hinweises auf die Patenterteilung: **14.04.2021**
(21) Anmeldenummer: 18187375.3
(22) Anmeldetag: 03.08.2018
(51) Int. Cl.: B25F 5/02, B23D 57/02

(54) **HANDGEFÜHRTES ARBEITSGERÄT**
MANUALLY OPERATED WORK DEVICE
APPAREIL DE TRAVAIL PORTATIF

(43) Veröffentlichungstag der Anmeldung: 05.02.2020
(73) Patentinhaber: Andreas Stihl AG & Co. KG, 71336 Waiblingen (DE)
(72) Erfinder: Schlecker, Christian, 71336 Waiblingen-Neustadt (DE); Häberlein, Jürgen, 71560 Sulzbach an der Murr (DE); Garstenauer, Andreas, Chesapeake, VA 23320 (US); Wawrzkiewicz, Eric, Virginia Beach, VA 23455 (US); Giesea, Andreas Michael, Ojai, CA 93023 (US)
(74) Vertreter: Wasmuth, Rolf

(56) Entgegenhaltungen:
- CN-U- 205 291 191
- DE-U1-202007 017 548
- DE-U1-202014 102 311
- JP-A- 2014 109 200
- JP-U- S60 184 602
- US-A1- 2015 047 210
- US-A1- 2015 321 377

## Beschreibung

Die Erfindung betrifft ein handgeführtes Arbeitsgerät nach dem Oberbegriff des Anspruchs 1.

Bei handgeführten Arbeitsgeräten mit einem einteilig mit dem Motorträger ausgebildeten Betriebsmitteltank, der beispielsweise Schmieröl zur Schmierung eines Bauteils des Arbeitsgeräts oder Kraftstoff zum Antrieb eines Verbrennungsmotors enthalten kann, ist es wünschenswert, den Füllstand des Betriebsmitteltanks auf einfache Weise zu erkennen.

Aus der DE 10 2006 048 550 A1 ist ein Betriebsmitteltank eines handgeführten Arbeitsgeräts mit einem in ein Deckelteil - bzw. einem zweiten Gehäuseabschnitt - des Betriebsmitteltanks integrierten Sichtfenster bekannt.

Aus der DE 20 2014 102 311 U1 ist ein Tankbehälter eines handgeführten Motorarbeitsgeräts mit zwei Behälterhälften bekannt. Jede Behälterhälfte weist ein Sichtfenster auf.

Es ist auch bekannt, den zweiten Gehäuseabschnitt des Betriebsmitteltanks zur Erkennung des Füllstands des Betriebsmitteltanks vollständig aus lichtdurchlässigem Material auszubilden.

Trotz des lichtdurchlässigen Materials des die Einfüllöffnung aufweisenden zweiten Gehäuseabschnittes ist der Füllstand des Betriebsmitteltanks nur schwer zu erkennen.

Der Erfindung liegt die Aufgabe zugrunde, ein gattungsgemäßes Arbeitsgerät derart weiterzubilden, dass eine gute Erkennung des Füllstands des Betriebsmitteltanks erzielt ist.

Die Aufgabe wird durch ein handgeführtes Arbeitsgerät mit den Merkmalen des Anspruchs 1 gelöst.

Die Erfindung sieht vor, dass der Motorträger ein lichtdurchlässiges Lichtleitelement zur Leitung von Licht in den Betriebsmitteltank aufweist. Durch das Lichtleitelement gelangt mehr Licht in den Betriebsmitteltank. Das lichtdurchlässige Lichtleitelement kann Licht aufnehmen und in den Betriebsmitteltank leiten. Das Lichtleitelement muss kein Lichtleiter im physikalischen Sinn sein, bei dem Licht über Reflexion an den Grenzflächen des Lichtleiters über kurze oder lange Strecken transportiert wird. Vielmehr reicht es bei dem erfindungsgemäßen Lichtleitelement aus, dass es aus einem lichtdurchlässigen Material gebildet ist, an dem sichtbares Licht gestreut wird. Das auf das Lichtleitelement einfallende Licht kann durch das lichtdurchlässige Lichtleitelement in den Betriebsmitteltank transmittiert werden. Das einfallende Licht scheint durch das Lichtleitelement in den Betriebsmitteltank. Zusätzlich kann das auf das Lichtleitelement einfallende Licht über Streuung im Lichtleitelement auch von Stellen des Motorträgers, die entfernt vom Betriebsmitteltank liegen, durch das Lichtleitelement in den Betriebsmitteltank geleitet werden. Das Lichtleitelement sammelt Licht ein und führt es in den Betriebsmitteltank. Das Lichtleitelement kann daher auch als Lichtsammelelement bezeichnet werden.

Durch die Leitung von Licht mittels des Lichtleitelements in den Betriebsmitteltank ist eine gute Erkennung des Füllstands des Betriebsmitteltanks durch den zumindest teilweise aus lichtdurchlässigem Material gebildeten zweiten Gehäuseabschnitt des Betriebsmitteltanks hindurch möglich.

Vorteilhaft ist das Lichtleitelement derart angeordnet, dass es Licht in den ersten Gehäuseabschnitt des Betriebsmitteltanks leitet. Dadurch kann eine Art Hintergrundbeleuchtung entstehen, die zu einer guten Erkennbarkeit des Füllstands durch den zweiten Gehäuseabschnitt hindurch führen kann.

Der erste Gehäuseabschnitt des Betriebsmitteltanks kann zumindest teilweise von einem lichtundurchlässigen Element des Arbeitsgeräts abgedeckt sein. In diesem Fall kann die Leitung von Licht in den Betriebsmitteltank, insbesondere in den ersten Gehäuseabschnitt, durch das Lichtleitelement besonders vorteilhaft sein. Durch das Lichtleitelement kann Licht über Stellen des ersten Gehäuseabschnitts des Betriebsmitteltanks weitergeleitet werden, die von dem lichtundurchlässigen Element abgedeckt sind.

Vorteilhaft ist der gesamte zweite Gehäuseabschnitt des Betriebsmitteltanks aus lichtdurchlässigem Material gebildet. Dies erleichtert die Erkennung des Füllstands des Betriebsmitteltanks durch den zweiten Gehäuseabschnitt hindurch.

Zweckmäßig ist das Lichtleitelement transluzent. Dadurch ist das Lichtleitelement nur partiell lichtdurchlässig. Es kann dann effizient Licht streuen und gleichzeitig einen Teil des Lichts transmittieren. Auf diese Weise kann das Lichtleitelement seinen beiden Funktionen, Licht zu sammeln und weiterzuleiten, vorteilhaft nachkommen. Das transluzente Lichtleitelement ist lichtdurchlässig, aber nicht blick- bzw. bilddurchlässig. Vorteilhaft transmittiert das Lichtleitelement bei einer Messung nach der Norm ISO 2471 weniger als 50% des sichtbaren Lichts. Insbesondere transmittiert das Lichtleitelement bei einer Messung nach der Norm ISO 2471 mehr als 20% des sichtbaren Lichts.

In vorteilhafter Weiterbildung der Erfindung besteht das Lichtleitelement aus Kunststoff. Dadurch ist das Lichtleitelement einfach und kostengünstig herzustellen. Auch komplexe Formen des Lichtleitelements können durch die Verwendung von Kunststoff auf einfache Weise realisiert werden.

Zweckmäßig ist das Lichtleitelement aus faserverstärktem Kunststoff. Vorteilhaft umfasst der Kunststoff zwischen 30 Gew.-% und 40 Gew.-%, insbesondere zwischen 33% und 37%, Fasern. Bevorzugt sind die Fasern Glasfasern. Dadurch kann das Lichtleitelement eine große Transluzenz, also eine hohe Transmissionsrate für sichtbares Licht aufweisen, bei gleichzeitig ausreichender Festigkeit.

Zweckmäßig sind dem Kunststoff weniger als 0,1 Gew.-% Farbpigmente zugemischt. Dadurch kann eine große Lichtdurchlässigkeit erreicht werden.

In vorteilhafter Weiterbildung der Erfindung ist das Lichtleitelement Teil einer Außenwand des Motorträgers. Dadurch kann das Lichtleitelement auf einfache Weise integral mit dem Motorträger ausgebildet sein. Dies reduziert die Anzahl an Bauteilen des Arbeitsgeräts und führt zu einer einfachen Montage des Arbeitsgeräts. Durch die Integration des Lichtleitelements in die Außenwand des Motorträgers kann das Lichtleitelement derart ausgebildet sein, dass es nicht über den Motorträger vorsteht.

Zweckmäßig erstreckt sich das Lichtleitelement zumindest über einen Teil der Wandstärke der Außenwand des Motorträgers. Vorteilhaft erstreckt sich das Lichtleitelement über die gesamte Wandstärke der Außenwand des Motorträgers. Dadurch kann die gesamte Wandstärke des Motorträgers im Bereich des Lichtleitelements zum Einsammeln und Weiterleiten von Licht in den Betriebsmitteltank genutzt werden.

In vorteilhafter Weiterbildung der Erfindung erstreckt sich das Lichtleitelement über mindestens 5%, insbesondere über mindestens 20%, einer äußeren Oberfläche des Motorträgers. Dadurch kann über die Oberfläche des Motorträgers Licht in den Betriebsmitteltank geleitet werden.

Das Lichtleitelement umfasst den gesamten ersten Gehäuseabschnitt des Betriebsmitteltanks. Dadurch kann Licht besonders gut in den ersten Gehäuseabschnitt des Betriebsmitteltas geleitet werden. Hierbei kann eine Art Hintergrundbeleuchtung des zweiten Gehäuseabschnitts geschaffen werden, die besonders effizient ist, da das Lichtleitelement den gesamten ersten Gehäuseabschnitt umfasst. Eine Erkennung des Füllstands durch den zweiten Gehäuseabschnitt hindurch ist besonders gut möglich.

In vorteilhafter Weiterbildung der Erfindung umfasst das Lichtleitelement den gesamten Motorträger. Dadurch kann auf einfache Weise eine große Menge Licht in den Betriebsmitteltank geleitet werden.

Zweckmäßig ist der Betriebsmitteltank ein Öltank. Es kann auch vorgesehen sein, dass der Betriebsmitteltank ein Kraftstofftank ist.

Das Arbeitsgerät kann eine Motorkettensäge sein und sowohl den Öltank als auch den Kraftstofftank umfassen. Vorteilhaft sind das Lichtleitelement des Öltanks und das Lichtleitelement des Kraftstofftanks durch ein gemeinsames Bauteil gebildet.

Vorteilhaft trägt der Motorträger ein Werkzeug.

Zweckmäßig ist der Motorträger sowohl in einem Bereich entfernt vom Betriebsmitteltank als auch in einem Bereich angrenzend an den Betriebsmitteltank transluzent ausgebildet.

Weitere Merkmale der Erfindung ergeben sich aus den weiteren Ansprüchen, der Beschreibung und den Zeichnungen, die Ausführungsbeispiele der Erfindung zeigen, welche nachfolgend im Einzelnen beschrieben sind. Es zeigen:
- Fig. 1: eine schematische perspektivische Ansicht eines erfindungsgemäßen handgeführten Arbeitsgeräts,
- Fig. 2: eine schematische perspektivische Ansicht eines handgeführten Arbeitsgeräts nach dem Stand der Technik,
- Fig. 3 bis 5: schematische perspektivische Ansichten einer alternativen Ausführung eines erfindungsgemäßen handgeführten Arbeitsgeräts,
- Fig. 6: eine schematische Seitenansicht des Arbeitsgeräts aus Fig. 4 senkrecht zur Drehachse des Antriebsmotors auf einen rückseitigen Handgriff in Richtung des Pfeils VI in Fig. 4,
- Fig. 7: eine schematische Seitenansicht des Arbeitsgeräts aus Fig. 4 senkrecht zur Drehachse des Antriebsmotors auf eine Frontseite des Arbeitsgeräts in Richtung des Pfeils VII in Fig. 4,
- Fig. 8: eine schematische Seitenansicht des Arbeitsgeräts aus Fig. 4 senkrecht zur Drehachse des Antriebsmotors auf eine Oberseite des Arbeitsgeräts in Richtung des Pfeils VIII in Fig. 4,
- Fig. 9: eine schematische Seitenansicht des Arbeitsgeräts aus Fig. 4 in Richtung parallel zur Drehachse des Antriebsmotors auf ein Abdeck-formteil des Arbeitsgeräts in Richtung des Pfeils IX in Fig. 4,
- Fig. 10 und 11: schematische perspektivische Ansichten eines Motorträgers und des darauf montierten Abdeckformteils des handgeführten Arbeitsgeräts aus Fig. 4,
- Fig. 12 bis 16: schematische Seitenansichten des Motorträgers und des Abdeckformteils aus den Figuren 10 und 11,
- Fig. 17 bis 19: schematische perspektivische Ansichten des Motorträgers und des entfernt vom Motorträger dargestellten Abdeckformteils aus den Figuren 10 und 11.

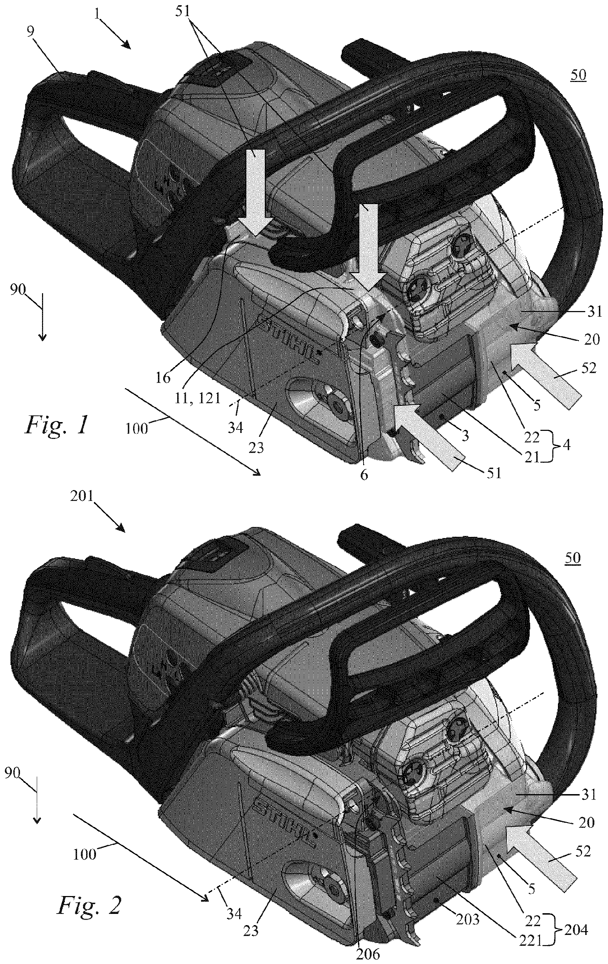

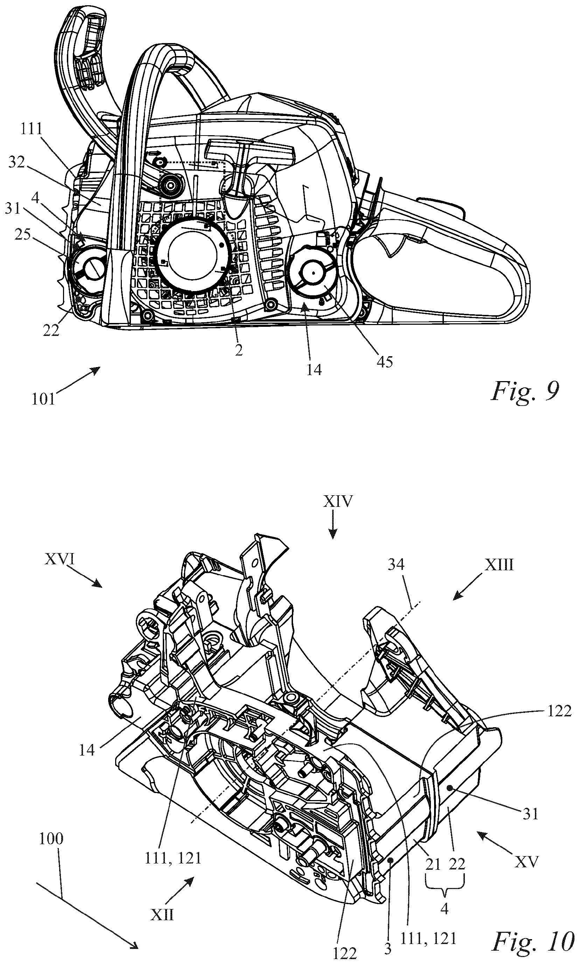

Fig. 1 zeigt in einer schematischen Perspektivdarstellung ein handgeführtes Arbeitsgerät 1 mit einem Betriebsmitteltank 4. Das handgeführte Arbeitsgerät 1 umfasst einen in Fig. 9 dargestellten Antriebsmotor 2. Der Antriebsmotor 2 ist an einem Motorträger 3 gehalten. In den Ausführungsbeispielen ist der Antriebsmotor 2 ein Verbrennungsmotor. Es kann aber auch vorgesehen sein, dass der Antriebsmotor ein Elektromotor ist. Wie in Fig. 1 dargestellt, weist der Betriebsmitteltank 4 einen ersten Gehäuseabschnitt 21 und einen zweiten Gehäuseabschnitt 22 auf. Der erste Gehäuseabschnitt 21 ist einteilig mit dem Motorträger 3 ausgebildet. Die einteilige Ausbildung des ersten Gehäuseabschnitts 21 mit dem Motorträger 3 wird insbesondere durch die Herstellung des Motorträgers 3 inklusive des ersten Gehäuseabschnitts 21 in einem Gießprozess, vorteilhaft in einem Spritzgießprozess, erreicht. Der zweite Gehäuseabschnitt 22 ist einteilig mit einem Abdeckformteil 31 ausgebildet. Der Motorträger 3 ist aus Kunststoff. Das Abdeckformteil 3 ist aus Kunststoff. Im Ausführungsbeispiel ist das Arbeitsgerät 1 eine Motorkettensäge. Das handgeführte Arbeitsgerät kann aber auch jedes beliebige andere handgeführte Arbeitsgerät mit einem Betriebsmitteltank sein, bei dem der erste Gehäuseabschnitt einteilig mit dem Motorträger ausgebildet ist.

Im Betriebsmitteltank 4 befindet sich Betriebsmittel 5. Das Betriebsmittel kann beispielsweise Öl oder Kraftstoff für einen Verbrennungsmotor sein. Im Betriebsmitteltank 4 nach Fig. 1 befindet sich Öl als Betriebsmittel 5. Zur Erkennung des Füllstands des Betriebsmitteltanks 3 ist in den Ausführungsbeispielen der gesamte zweite Gehäuseabschnitt 22 aus lichtdurchlässigen Material gebildet. In den Ausführungsbeispielen ist der gesamte zweite Gehäuseabschnitt 22 des Betriebsmitteltanks 4 aus transluzentem Material gebildet. Das transluzente Material ist nur partiell lichtdurchlässig. Es lässt teilweise Licht durch, ist aber nicht transparent. In den Ausführungsbeispielen wird von transluzentem Material mehr als 20% des sichtbaren Lichts transmittiert. Weniger als 50% des sichtbaren Lichts werden vom transluzentem Material transmittiert. Die Transmissionswerte sind nach der Norm ISO 2471 gemessen. Zwischen 50% und 80% des sichtbaren Lichts werden im transluzenten Material absorbiert. Durch das transluzente Material des zweiten Gehäuseabschnitts 22 hindurch gelangt Licht von der Außenseite 50 das Arbeitsgeräts 1 in einen Innenraum 20 des Betriebsmitteltanks 4. Dies ist in Fig. 1 durch den Pfeil 52 dargestellt. An der Außenseite des zweiten Gehäuseabschnitts 22 lässt sich aufgrund des Kontrastes zwischen dem Bereich des Betriebsmitteltanks 4 mit Betriebsmittel 5 und dem Bereich des Betriebsmitteltanks 4 ohne Betriebsmittel 5 der Füllstand des Betriebsmitteltanks 4 erkennen. Auf diese Weise kann einfach festgestellt werden, wieviel Betriebsmittel 5 sich noch im Betriebsmitteltank 4 befindet.

Der erste Gehäuseabschnitt 21 des Betriebsmitteltanks 4 ist zumindest teilweise von einem lichtundurchlässigen Element 23 des Arbeitsgeräts 1 abgedeckt. Im Ausführungsbeispiel ist das lichtundurchlässige Element 23 ein Kettenraddeckel. Das lichtundurchlässige Element des Arbeitsgeräts kann aber auch beispielsweise eine Farbschicht sein. Wegen solcher lichtundurchlässigen Elemente gelangt bei Arbeitsgeräten nach dem Stand der Technik nicht genügend Licht in den Betriebsmitteltank, um den Füllstand des Betriebsmitteltanks im zweiten Gehäuseabschnitt des Betriebsmittelstanks leicht erkennen zu können.

Um mehr Licht in den Innenraum 20 des Betriebsmitteltanks 4, insbesondere in den Innenraum des ersten Gehäuseabschnitts 21 des Betriebsmitteltanks 4 zu bringen, weist der Motorträger 3 ein lichtdurchlässiges erstes Lichtleitelement 11 zur Leitung von Licht in den Betriebsmitteltank 4 auf.

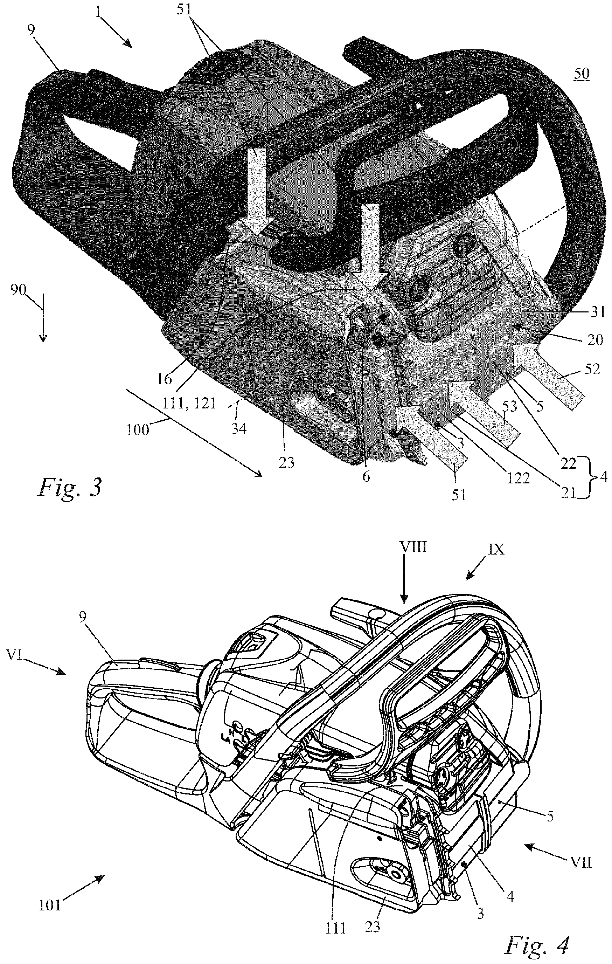

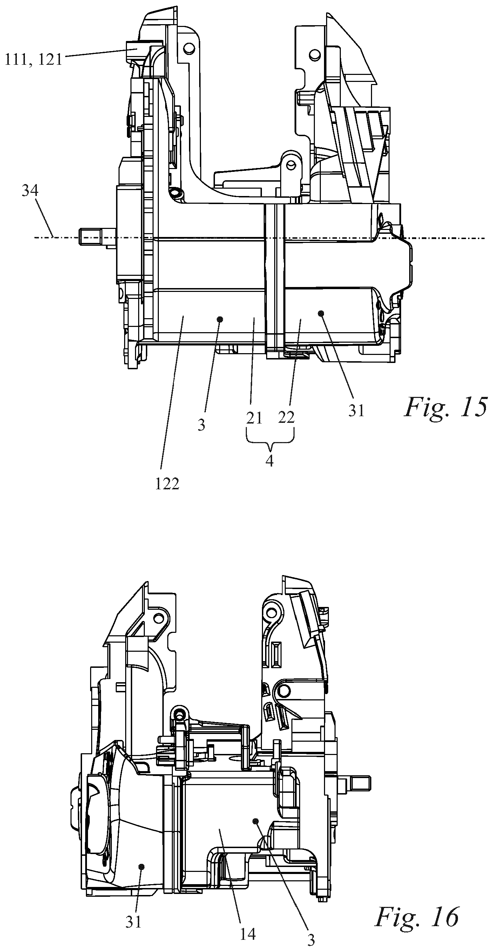

Das erste Lichtleitelement 11 zeichnet sich dadurch aus, dass es Licht ausschließlich entfernt vom ersten Gehäuseabschnitt 21 des Betriebsmitteltanks 4 einsammelt. Die Aufnahme von Licht in das erste Lichtleitelement 11 erfolgt in einem Bereich einer Außenwand 6 des Motorträgers 3, der nicht das Volumen des Betriebsmitteltanks 4 begrenzt. Das erste Lichtleitelement 11 sammelt im Gegensatz zu einem in den Figuren 3 bis 19 dargestellten zweiten Lichtleitelement 111 kein Licht direkt am ersten Gehäuseabschnitt 21 des Betriebsmitteltanks 4 ein.

Das erste Lichtleitelement 11 erstreckt sich in Längsrichtung 100 des Arbeitsgeräts 1 quer zu einer Drehachse 34 des in Fig. 1 verdeckt liegenden Antriebsmotors 2 in Richtung von einem Handgriff 9 zum Betriebsmitteltank 4. Das erste Lichtleitelement 11 nach Fig. 1 verläuft in einer Ebene senkrecht zur Drehachse 34 abgewinkelt. Das erste Lichtleitelement 11 weist ein Ende 16 auf, das dem Handgriff 9 des Arbeitsgeräts 1 zugewandt ist. Ausgehend vom Ende 16 des ersten Lichtleitelements 11 verläuft das erste Lichtleitelement 11 zunächst in Längsrichtung 100 in Richtung weg vom Handgriff 9 und knickt dann in Vertikalrichtung 90 nach unten ab. Das erste Lichtleitelement 11 erstreckt sich bis zu dem Innenraum 20 des Betriebsmitteltanks 4. Das erste Lichtleitelement 11 leitet Licht bis zum Innenraum 20 des Betriebsmitteltanks 4. Im Ausführungsbeispiel nach Fig. 1 ist das erste Lichtleitelement 11 mit einer verdeckt liegenden Rückwand des ersten Gehäuseabschnitts 21 des Betriebsmitteltanks 4 an einer ebenfalls nicht dargestellten Lichteintrittsstelle des ersten Gehäuseabschnitts 21 verbunden. Zumindest ein Teil des vom ersten Lichtleitelement 11 aufgenommenen Lichts wird an der Lichteintrittsstelle in den Betriebsmitteltank 4 geleitet. Die Lichteintrittsstelle liegt in einer Abstellposition des handgeführten Arbeitsgeräts 1 in einem oberen Bereich des Betriebsmitteltanks 4. Bei nicht vollständig gefülltem Betriebsmitteltank 4 ist die Lichteintrittsstelle in der Abstellposition des handgeführten Arbeitsgeräts 1 oberhalb des Betriebsmittels 5 angeordnet. Dadurch wird das Licht vom ersten Lichtleitelement 11 durch die Lichteintrittsstelle in einen Bereich des Betriebsmitteltanks 4 geleitet, in dem sich kein Betriebsmittel 5 befindet.

Der Motorträger 3 besitzt die Außenwand 6. Das erste Lichtleitelement 11 ist Teil der Außenwand 6. Das erste Lichtleitelement 11 erstreckt sich zumindest über einen Teil der Wandstärke der Außenwand. Das gesamte erste Lichtleitelement 11 ist transluzent. Bei Lichteinfall von sichtbarem Licht auf das Lichtleitelement werden mehr als 30% des einfallenden Lichts transmittiert. Bei Einfall von sichtbarem Licht werden weniger als 50% des einfallenden Lichts vom ersten Lichtleitelement 11 transmittiert. Dadurch wird eine große Menge des einfallenden Lichts im ersten Lichtleitelement 11 gestreut und im Inneren des ersten Lichtleitelements 11 über nachfolgende Streuprozesse weitergeleitet. In Fig. 1 ist das auf das erste Lichtleitelement 11 einfallende sichtbare Licht durch Pfeile 51 dargestellt.

Wie in Fig. 1 dargestellt, fällt das Licht entlang der Pfeile 51 an einem vom Betriebsmitteltank 4 entfernt liegenden Ort auf das erste Lichtleitelement 11 ein und wird von dort durch Streuung zum Betriebsmitteltank 4 weitergeleitet. Im Ausführungsbeispiel nach Fig. 1 tritt das derart vom ersten Lichtleitelement 11 eingesammelte Licht an der Rückwand des ersten Gehäuseabschnitts 21 des Betriebsmitteltanks 4 an der Lichteintrittsstelle in den Innenraum 20 des Betriebsmitteltanks 4 ein. Dadurch entsteht eine Art Hintergrundbeleuchtung. Diese Hintergrundbeleuchtung beleuchtet den Innenraum des zweiten Gehäuseabschnitts 22 des Betriebsmitteltanks 4 ausgehend von der dem zweiten Gehäuseabschnitt 22 abgewandt liegenden Rückwand des ersten Gehäuseabschnitts 21. Dadurch wird der Kontrast zwischen Bereichen des zweiten Gehäuseabschnitts 22, in denen Betriebsmittel 5 vorhanden ist, und Bereichen des Betriebsmitteltanks 4, in denen kein Betriebsmittel 5 vorhanden ist, erhöht. Dadurch ist der Füllstand des Betriebsmitteltanks 4 deutlich von der Außenseite 50 des Arbeitsgeräts 1 her an dem zweiten Gehäuseabschnitt 22 des Betriebsmitteltanks 4 zu erkennen.

Zum Vergleich des in Fig. 1 dargestellten erfindungsgemäßen handgeführten Arbeitsgeräts 1 mit dem Stand der Technik ist in Fig. 2 ein handgeführtes Arbeitsgerät 201 nach dem Stand der Technik gezeigt. Bauteile des handgeführten Arbeitsgeräts 201 nach dem Stand der Technik, die identisch zu Bauteilen des erfindungsgemäßen handgeführten Arbeitsgeräts 1 sind, sind mit denselben Bezugszeichen bezeichnet. Im Unterschied zum erfindungsgemäßen handgeführten Arbeitsgerät 1 weist das handgeführte Arbeitsgerät nach dem Stand der Technik kein transluzentes erstes Lichtleitelement 11 auf, das Teil der Außenwand 6 des Motorträgers 3 ist. Das handgeführte Arbeitsgerät 201 nach dem Stand der Technik umfasst stattdessen einen Motorträger 203. Die Außenwand des Motorträgers 203 ist undurchsichtig und weist an keiner Stelle ein transluzentes Lichtleitelement auf. Ein Betriebsmitteltank 204 des handgeführten Arbeitsgeräts 201 umfasst einen ersten Gehäuseabschnitt 221 und den zweiten Gehäuseabschnitt 22. Der erste Gehäuseabschnitt 221 ist Teil des Motorträgers 203. Der erste Gehäuseabschnitt 221 weist keine Lichteintrittsstelle in den Betriebsmitteltank 204 auf. Wie durch den Pfeil 52 in Fig. 2 dargestellt, kann Licht nur durch den zweiten, transluzenten Gehäuseabschnitt 22 in den Betriebsmitteltank 204 gelangen.

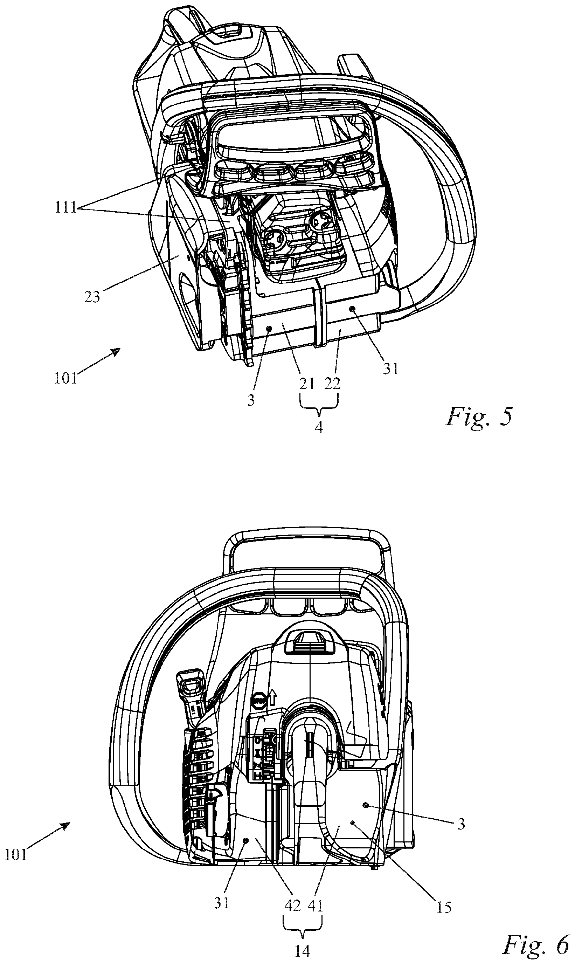

Die Figuren 3 bis 19 betreffen eine alternative Ausführung eines Arbeitsgeräts 101 nach Fig. 1. Bezugszeichen von sich entsprechenden Bauteilen der Arbeitsgeräte 1 und 101 sind gleich gewählt. Lediglich die die Lichtleitelemente betreffenden Bezugszeichen unterscheiden sich. Die die übrigen Bauteile der Arbeitsgerät 1 und 101 betreffenden Aussagen ohne Bezug zu den Lichtleitelementen sind auf das jeweils andere Arbeitsgerät übertragbar. Wie in den Figuren 5 bis 10 dargestellt, umfasst auch das Arbeitsgerät 101 den ersten Betriebsmitteltank 4. Im ersten Betriebsmitteltank 4 befindet sich als erstes Betriebsmittel 5 Öl zur Schmierung einer nicht gezeigten Sägekette (Fig. 4). Es kann vorgesehen sein, dass das Arbeitsgerät 1 und das Arbeitsgerät 101 auch einen in Fig. 6 dargestellten zweiten Betriebsmitteltank 14 umfassen. Im zweiten Betriebsmitteltank 14 befindet sich als zweites Betriebsmittel 15 (Fig. 6) Kraftstoff zum Betrieb des in Fig. 9 dargestellten als Verbrennungsmotor ausgebildeten Antriebsmotors 2.

Wie sich aus den Figuren 4 und 5 ergibt, umfasst das Arbeitsgerät 101 ein zweites Lichtleitelement 111.

Das zweite Lichtleitelement 111 des handgeführten Arbeitsgeräts 101 nach den Figuren 3 bis 19 erstreckt sich im Unterschied zum ersten Lichtleitelement 11 nach Fig. 1 auch über den ersten Gehäuseabschnitt 21 des Betriebsmitteltanks 4. Das zweite Lichtleitelement 111 des Arbeitsgeräts 101 nach den Figuren 3 bis 19 sammelt Licht sowohl im Bereich der Außenwand 6 des Motorträgers 3 ein, der entfernt vom ersten Gehäuseabschnitt 21 des Betriebsmitteltanks 4 und/oder des Betriebsmitteltanks 4 liegt, als auch in dem Bereich der Außenwand 6 des Motorträgers 3, der den Betriebsmitteltank 4 begrenzt. Das zweite Lichtleitelement 111 ist aus demselben Material wie das erste Lichtleitelement 11 des Arbeitsgeräts 1 hergestellt. Alle Aussagen zum ersten Lichtleitelement 11 des handgeführten Arbeitsgeräts 1 nach Fig. 1 treffen auch auf das zweite Lichtleitelement 111 des handgeführten Arbeitsgeräts 101 nach den Figuren 3 bis 19 zu.

Das Lichtleitelement 11, 111 ist Teil des Motorträgers 3. Der Motorträger 3 ist ein tragendes Bauteil des handgeführten Arbeitsgeräts 101. Der Motorträger 3 trägt den Antriebsmotor 2. Der Antriebsmotor 2 ist am Motorträger 2 befestigt. Auch eine nicht dargestellte Führungsschiene ist unmittelbar am Motorträger 3 befestigt. Der Motorträger 3 trägt ein Werkzeug. Das Werkzeug ist die Sägekette. Die Sägekette ist in der Führungsschiene geführt. Der Motorträger 3 nimmt die auf die Sägekette und die Führungsschiene wirkenden Kräfte auf.

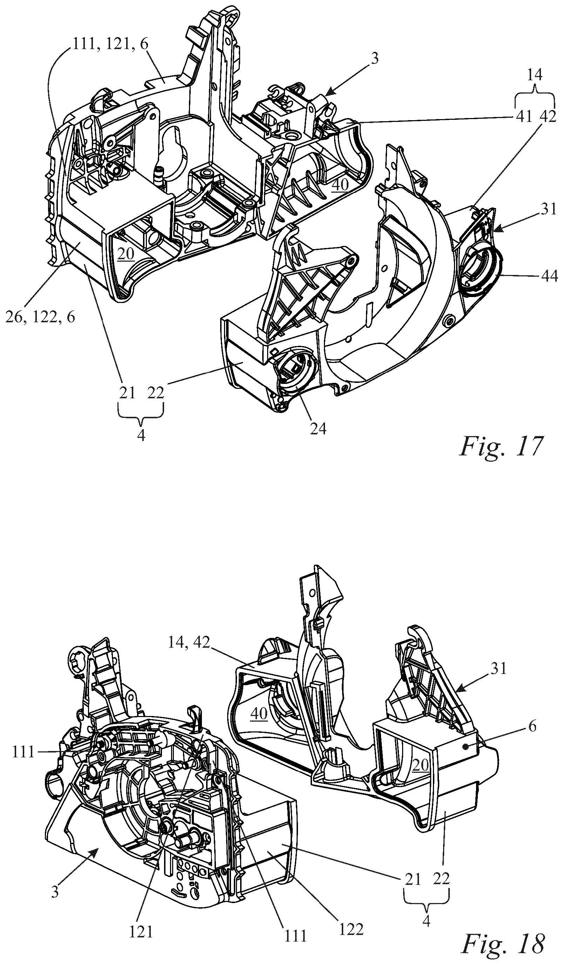

Der zweite Gehäuseabschnitt 22 des ersten Betriebsmitteltanks 4 ist vollständig aus lichtdurchlässigem Material gebildet. Das lichtdurchlässige Material ist das bereits zum ersten Ausführungsbeispiel beschriebene transluzente Material und weist für sichtbares Licht die dort beschriebenen, gemäß der Norm ISO 2471 gemessenen Transmissionswerte zwischen 20% und 50% auf. Dies ermöglicht eine Erkennung des Füllstands des ersten Betriebsmitteltanks 4. Wie in Fig. 3 durch den Pfeil 53 dargestellt, kann Licht durch den ersten Gehäuseabschnitt 21 des Betriebsmitteltanks 4 hindurch in das in den Figuren 17 und 18 dargestellte Innere 20 des Betriebsmitteltanks 4 fallen.

Das zweite Lichtleitelement 111 des handgeführten Arbeitsgeräts 101 lässt sich unterteilen in ein erstes Teillichtleitelement 121 und ein zweites Teillichtleitelement 122. Das erste Teillichtleitelement 121 ist entfernt vom Betriebsmitteltank 4, 14 angeordnet und erstreckt sich bis zum Betriebsmitteltank 4, 14. Das erste Teillichtleitelement 121 ist Teil des Motorträgers 3. Im Bereich des ersten Teillichtleitelements 121 ist der Motorträger 3 transluzent. Das in Fig. 1 dargestellte erste Lichtleitelement 11 weist ebenfalls das entfernt vom Betriebsmitteltank 4 angeordnete erste Teillichtleitelement 121 auf.

Das zweite Teillichtleitelement 122 ist Teil des ersten Gehäuseabschnitts 21 des Betriebsmitteltanks 4. Der erste Gehäuseabschnitt 21 des Betriebsmitteltanks 4 weist eine in Fig. 17 dargestellte Außenwand 26 auf. Die Außenwand 26 trennt den Innenraum 20 des ersten Betriebsmitteltanks 4 von der Außenseite 50 des handgeführten Arbeitsgeräts 101. Das zweite Teillichtleitelement 122 ist Teil der Außenwand 26 des ersten Gehäuseabschnitts 21 des Betriebsmitteltanks 4. Im Bereich des zweiten Teillichtleitelements 122 ist die Außenwand 26 des ersten Gehäuseabschnitts 21 des Betriebsmitteltanks 4 transluzent. Im Ausfuhrungsbeispiel nach den Figuren 3 bis 19 ist die gesamte Außenwand 26 des ersten Gehäuseabschnitts 21 des Betriebsmitteltanks 4 transluzent. Ebenfalls ist der Motorträger 3 im Ausführungsbeispiel nach den Figuren 3 bis 19 in einem Bereich angrenzend an den Betriebsmitteltank 4 transluzent ausgebildet. Das in Fig. 1 dargestellte erste Lichtleitelement 11 weist kein als Teil des ersten Gehäuseabschnitts 21 des Betriebsmitteltanks 4 ausgebildetes zweites Teillichtleitelement auf.

Die Figuren 10 bis 19 zeigen verschiedene Ansichten des Motorträgers 3 und des Abdeckformteils 31. Gemeinsam bilden der Motorträger 3 und das Abdeckformteil 31 ein Mittelteil des Arbeitsgeräts 101. Das Mittelteil des Arbeitsgeräts 101 ist zwischen der nicht dargestellten Führungsschiene und dem in Fig. 4 dargestellten Handgriff 9 des Arbeitsgeräts 101 angeordnet. Im zusammengebauten Zustand des Arbeitsgeräts 101 ist das Abdeckformteil 31 auf dem Motorträger 3 angeordnet. Das Abdeckformteil 31 und der Motorträger 3 liegen in Richtung der Drehachse 34 nebeneinander. Das Abdeckformteil 31 und der Motorträger 3 sind fest miteinander verbunden. Im Arbeitsgerät 101 nach Fig. 4 ist der als Verbrennungsmotor ausgebildete Antriebsmotor 2 auf dem in Fig. 10 dargestellten Motorträger 3 montiert. Der erste Gehäuseabschnitt 21 des ersten Betriebsmitteltanks 4 und der erste Gehäuseabschnitt 41 des zweiten Betriebsmitteltanks 14 sind einteilig mit dem Motorträger 3 ausgebildet. Der Antriebsmotor 2 ist in Längsrichtung 100 zwischen dem ersten Gehäuseabschnitt 21 des ersten Betriebsmitteltanks 4 bzw. des Motorträgers 3 und dem ersten Gehäuseabschnitt 41 des zweiten Betriebsmitteltanks 14 bzw. des Motorträges 3 angeordnet.

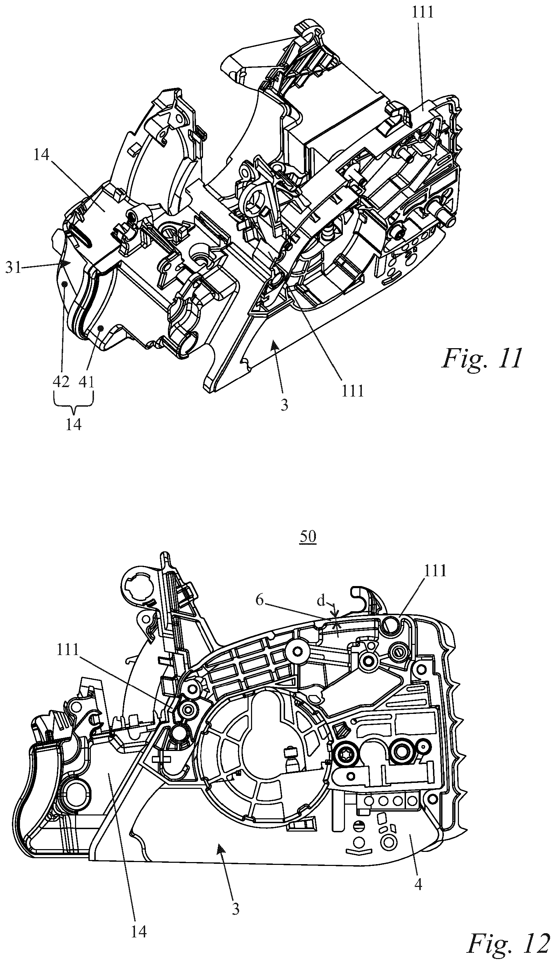

In der schematischen Perspektivdarstellung des Mittelteils nach Fig. 10 sind Pfeile XII, XIII, XIV, XV und XVI eingezeichnet. Die Pfeile zeigen jeweils eine Blickrichtung an, aus der das Mittelteil in den Figuren 12 bis 16 betrachtet wird. Hierbei sind die Pfeile jeweils den Figuren zuzuordnen, deren arabische Ziffer der römischen Ziffer der Pfeile entspricht.

Fig. 11 verdeutlicht nochmals die Position des zweiten Lichtleitelements 111. Das zweite Lichtleitelement 111 ist mit dem zweiten Betriebsmitteltank 14 verbunden. Der zweite Betriebsmitteltank 14 weist einen ersten Gehäuseabschnitt 41 und einen zweiten Gehäuseabschnitt 42 auf. Der erste Gehäuseabschnitt 41 ist einteilig mit dem Motorträger 3 ausgebildet. Der zweite Gehäuseabschnitt 42 ist einteilig mit dem Abdeckformteil 31 ausgebildet.

Wie in Fig. 12 dargestellt, weist der Motorträger 3 eine Außenwand 6 mit einer variierenden Wandstärke d auf. Die Außenwand 6 ist zumindest teilweise, insbesondere im Bereich des zweiten Lichtleitelements 111 von der Außenseite 50 des Arbeitsgeräts 101 her sichtbar. Das zweite Lichtleitelement 111 erstreckt sich zumindest abschnittsweise über die gesamte Wandstärke d der Außenwand 6. Dadurch kann Licht durch den Bereich der Außenwand 6, in dem das zweite Lichtleitelement 111 angeordnet ist und in dem sich das zweite Lichtleitelement 111 über die gesamte Wandstärke d der Außenwand 6 erstreckt, durch die Außenwand 6 scheinen. Vorteilhaft ist das zweite Lichtleitelement 111 in dem bezeichneten Bereich von anderen Bauteilen des handgeführten Arbeitsgeräts 101 zumindest teilweise unabgedeckt. Das zweite Lichtleitelement 111 liegt zumindest teilweise von der Außenseite 50 des handgeführten Arbeitsgeräts 101 her sichtbar an der Oberfläche des handgeführten Arbeitsgeräts 101. Die Außenwand 6 des Motorträgers 3 begrenzt teilweise den in Fig. 17 dargestellten Innenraum 20 des Betriebsmitteltanks 4.

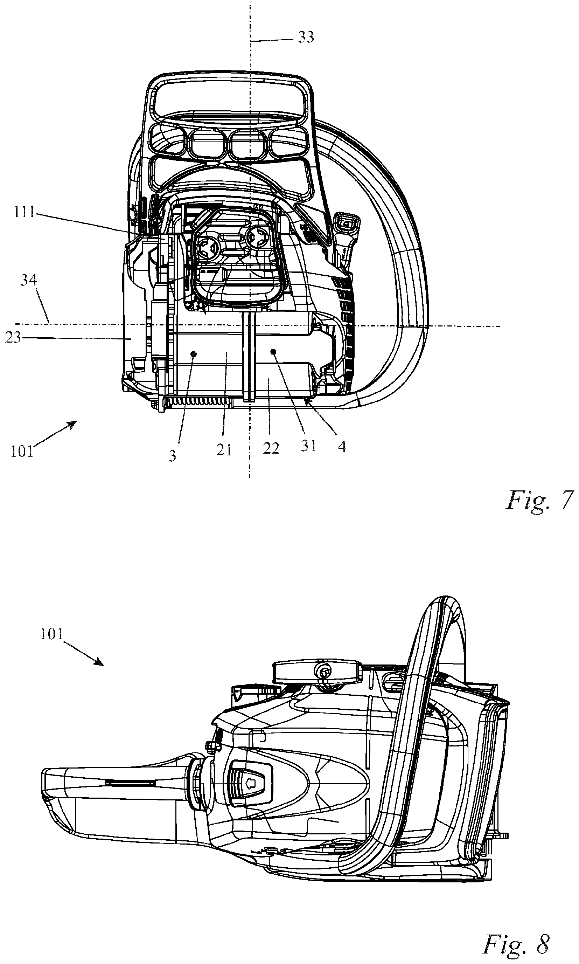

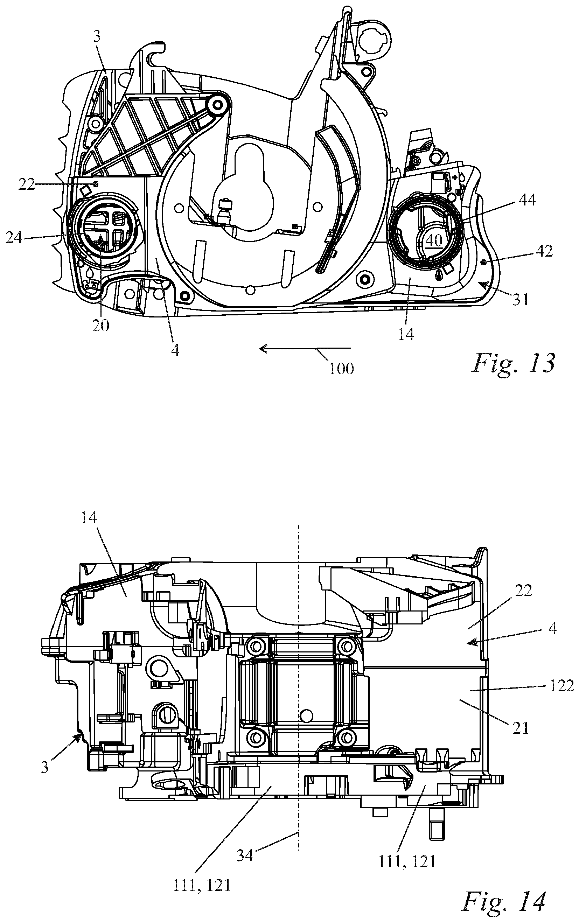

Fig. 13 zeigt eine Seitenansicht auf das aus Motorträger 3 und Abdeckformteil 31 gebildete Mittelteil in Richtung des in Fig. 10 eingezeichneten Pfeils XIII. Der Blick ist also parallel zur in Fig. 11 eingezeichneten Drehachse 34 auf das Abdeckformteil 31 gerichtet. In dieser Ansicht sind die Positionen des ersten Betriebsmitteltanks 4 und des zweiten Betriebsmitteltanks 14 gut zu erkennen. Der erste Betriebsmitteltank 4 liegt auf der dem in Fig. 2 eingezeichneten Handgriff 9 abgewandten Seite des Mittelteils. Der zweite Betriebsmitteltank 14 liegt auf der dem Handgriff 9 zugewandten Seite des Mitteiteils. Im zusammengebauten Zustand des Arbeitsgeräts 101 ist zwischen dem ersten Betriebsmitteltank 4 und dem zweiten Betriebsmitteltank 14 der in Fig. 7 schematisch eingezeichnete Antriebsmotor 2 angeordnet.

Der zweite Gehäuseabschnitt 42 des zweiten Betriebsmitteltanks 14 ist vollständig aus lichtdurchlässigem Material gebildet.

In den Ausführungsbeispielen nach den Figuren 1 und 3 bis 19 ist das gesamte Abdeckformteil 31 aus lichtdurchlässigem Material ausgebildet. Das gesamte Abdeckformteil 31 ist aus dem beschriebenen transluzenten Material ausgebildet. Das gesamte Abdeckformteil 31 weist für sichtbares Licht die bereits beschriebenen, gemäß der Norm ISO 2471 gemessenen Transmissionswerte zwischen 20% und 50% auf. Dadurch, dass das gesamte Abdeckformteil 31 lichtdurchlässig ausgebildet ist, ist das Abdeckformteil 31 einfach herzustellen.

Im zusammengebauten Zustand des handgeführten Arbeitsgeräts 101 ist das Abdeckformteil 31 außerhalb des Bereichs des Betriebsmitteltanks 4, 14 von Bauteilen des handgeführten Arbeitsgeräts 101 abgedeckt, so dass in der Abstellposition ein Lichteintrag in das Abdeckformteil 31 abseits des Betriebsmitteltanks 4, 14 verhindert ist. Dies ist beispielsweise in Fig. 9 dargestellt, wo das Abdeckformteil 31 außerhalb des Bereichs des Betriebsmitteltanks 4, 14 von einem Gehäusebauteil 32 abgedeckt ist.

Der zweite Gehäuseabschnitt 22 des ersten Betriebsmitteltanks 4 weist eine erste Tanköffnung 24 des ersten Betriebsmitteltanks 4 auf. Die in Fig. 13 dargestellte erste Tanköffnung 24 gibt den Blick in den Innenraum 20 des ersten Betriebsmitteltanks 4 frei. In analoger Weise weist der zweite Gehäuseabschnitt 42 des zweiten Betriebsmitteltanks 14 eine zweite Tanköffnung 44 auf. Durch die zweite Tanköffnung 44 ist in Fig. 4 der Innenraum 40 des zweiten Betriebsmitteltanks 14 zu erkennen. Wie in Fig. 9 dargestellt, ist die erste Tanköffnung 24 durch einen ersten Tankdeckel 25 verschlossen. Die zweite Tanköffnung 44 ist durch einen zweiten Tankdeckel 45 verschlossen. Es kann vorgesehen sein, dass der Tankdeckel 25, 45 lichtdurchlässig und transluzent ausgebildet ist. In den Ausführungsbeispielen ist der Tankdeckel 25, 45 jedoch undurchlässig für sichtbares Licht.

In den Figuren 17 bis 19 sind der Motorträger 3 und das Abdeckformteil 31 des Mittelteils entfernt voneinander dargestellt. Aus diesen Figuren 17 bis 19 wird deutlich, dass der Innenraum 20 des ersten Betriebsmitteltanks 4 sowohl vom Motorträger 3 als auch vom Abdeckformteil 31 gebildet ist. Auch der Innenraum 40 des zweiten Betriebsmitteltanks 14 ist sowohl vom Motorträger 3 als auch vom Abdeckformteil 31 gebildet. Sowohl der Motorträger 3 als auch das Abdeckformteil 31 weisen zur Bildung des ersten Betriebsmitteltanks 4 jeweils einen Hohlraum auf. Ebenso weisen der Motorträger 3 und das Abdeckformteil 31 zur Bildung des zweiten Betriebsmitteltanks 40 jeweils einen Hohlraum auf. Die Hohlräume korrespondieren an einer Verbindungsfläche miteinander. Beim Zusammenfügen des Motorträgers 3 und des Abdeckformteils 31 wird aus den miteinander korrespondierenden Hohlräumen des Motorträgers 3 und des Abdeckformteils 31 der Innenraum 20 des ersten Betriebsmittelteils 4 und der Innenraum 40 des zweiten Betriebsmitteltanks 14 gebildet.

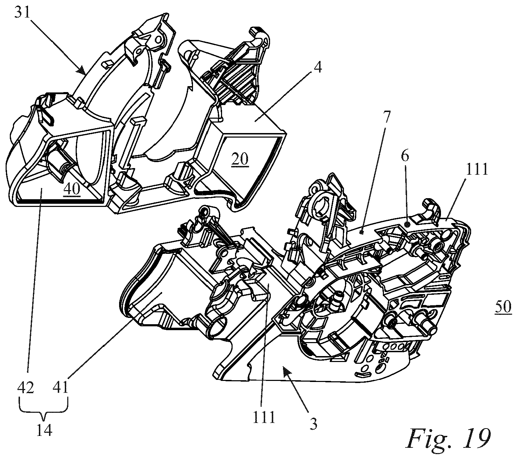

Wie in Fig. 19 dargestellt, weist der Motorträger 3 eine äußere Oberfläche 7 auf. Die äußere Oberfläche ist zumindest teilweise von der Außenseite 50 des in Fig. 4 dargestellten Arbeitsgeräts 101 her sichtbar. Das in Fig. 19 gezeigte zweite Lichtleitelement 111 erstreckt sich über mindestens 5% der Oberfläche 7. Im Ausführungsbeispiel nach den Figuren 3 bis 19 erstreckt sich das zweite Lichtleitelement 111 über mindestens 20% der Oberfläche 7. Es kann vorgesehen sein, dass sich das zweite Lichtleitelement 111 über weniger als 30% der Oberfläche 7 des Motorträgers 3 erstreckt. Im Ausführungsbeispiel nach den Figuren 3 bis 19 ist dies jedoch nicht der Fall. Das zweite Lichtleitelement 111 umfasst den gesamten ersten Gehäuseabschnitt 21 des ersten Betriebsmitteltanks 4. Im Ausführungsbeispiel nach den Figuren 3 bis 19 umfasst das zweite Lichtleitelement 111 den gesamten Motorträger 3. Das zweite Lichtleitelement 111 erstreckt sich im Ausführungsbeispiel über die gesamte von außen sichtbare Oberfläche 7 des Motorträgers 3. Das zweite Lichtleitelement 111 ist im Motorträger 3 ausgebildet.

Die Lichtleitelemente 11, 111 der Arbeitsgeräte 1, 101 sind in den Ausführungsbeispielen nach den Figuren 1 bis 19 aus Kunststoff. Die Lichtleitelemente 11 und 111 sind aus faserverstärktem Kunststoff. Der faserverstärkte Kunststoff umfasst zwischen 30 Gew.-% und 40 Gew.-%, im Ausführungsbeispiel mehr als 33 Gew.-% und bis einschließlich 35 Gew.-%, Fasern. In den Ausführungsbeispielen umfasst der faserverstärkte Kunststoff mehr als 33 Gew.-% Fasern. Die Fasern sind in den Ausführungsbeispielen Glasfasern. Durch die Verwendung eines Kunststoffs mit zwischen 30 Gew.-% und 40°Gew.-% Glasfasern für das Lichtleitelement 11, 111 kann das Lichtleitelement transluzent sein und gleichzeitig die erforderliche Festigkeit und Steifigkeit aufweisen. Es kann auch vorgesehen sein, dass das Lichtleitelement aus faserfreiem Kunststoff ist.

Dem Kunststoff des Lichtleitelements 11, 111 sind weniger als 0,1 Gew.-% Farbpigmente zugemischt. Das Material des Lichtleitelements 11, 111 enthält den Werkstoff PA6 GF 35 natur. Die Wandstärke des Motorträgers 3 im Bereich des Lichtleitelements 11, 111 beträgt in den Ausführungsbeispielen weniger als 2 mm. Dem Material des Lichtleitelements 11, 111 sind optische Aufheller beigemischt. Dadurch wird ein spezieller Weißton des Materials erzielt. Bei den optischen Aufhellern handelt es sich um UV-aktive optische Aufheller.

Zur Verbesserung der Beständigkeit des Lichtleitelements 11, 111 gegenüber UV-Licht sind dem Granulat, aus dem der Kunststoff für das Lichtleitelement 11, 111 hergestellt wird, Stabilisatoren beigefügt. Dies reduziert die Gefahr von Verfärbungen des Lichtleitelements 11, 111 unter Einwirkung von UV-Licht.

In den Ausführungsbeispielen ist das Abdeckformteil 31 aus demselben Material hergestellt, wie das Lichtleitelement 11, 111. Dadurch wird auch für den zweiten Gehäuseabschnitt 22 des ersten Betriebsmitteltanks 4 und den zweiten Gehäuseabschnitt 42 des zweiten Betriebsmitteltanks 14 eine gute Transluzenz mit den angestrebten Transmissionswerten erreicht. Durch die Verwendung von Aufhellern für das Material des Abdeckformteils 31 wird die Kontrastwirkung zwischen dem im Betriebsmitteltank 4, 14 befindlichen Betriebsmittel 5, 15 und dem zweiten Gehäuseabschnitt 22, 42 verstärkt. Dadurch ist der Füllstand des Betriebsmitteltanks 4, 14 deutlicher zu erkennen.

Die zu einem Ausführungsbeispiel hervorgehobenen Vorteile und Merkmale können auch auf andere Ausführungsbeispiele übertragen oder mit Merkmalen und Vorteilen anderer Ausführungsbeispiele kombiniert werden.

## Patentansprüche

1. Handgeführtes Arbeitsgerät umfassend einen Antriebsmotor (2), einen Betriebsmitteltank (4, 14) und einen Motorträger (3), an dem der Antriebsmotor (2) gehalten ist, wobei der Betriebsmitteltank (4, 14) einen ersten Gehäuseabschnitt (21) und einen zweiten Gehäuseabschnitt (22) aufweist, wobei der erste Gehäuseabschnitt (21) einteilig mit dem Motorträger (3) ausgebildet ist, wobei zumindest ein Teil des zweiten Gehäuseabschnitts (22) zur Erkennung des Füllstands des Betriebsmitteltanks (4, 14) aus lichtdurchlässigem Material gebildet ist, wobei der Motorträger (3) ein lichtdurchlässiges Lichtleitelement (11, 111) zur Leitung von Licht in den Betriebsmitteltank (4, 14) aufweist,
**dadurch gekennzeichnet, dass** das Lichtleitelement (111) den gesamten ersten Gehäuseabschnitt (21) des Betriebsmitteltanks (4, 14) umfasst.

2. Handgeführtes Arbeitsgerät nach Anspruch 1,
**dadurch gekennzeichnet, dass** der erste Gehäuseabschnitt (21) des Betriebsmitteltanks (4, 14) zumindest teilweise von einem lichtundurchlässigen Element (23) des Arbeitsgeräts (1, 101) abgedeckt ist.

3. Handgeführtes Arbeitsgerät nach Anspruch 1 oder Anspruch 2,
**dadurch gekennzeichnet, dass** der gesamte zweite Gehäuseabschnitt (22) des Betriebsmitteltanks (4, 14) aus lichtdurchlässigem Material gebildet ist.

4. Handgeführtes Arbeitsgerät nach einem der Ansprüche 1 bis 3,
**dadurch gekennzeichnet, dass** das Lichtleitelement (11, 111) transluzent ist.

5. Handgeführtes Arbeitsgerät nach einem der Ansprüche 1 bis 4,
**dadurch gekennzeichnet, dass** das Lichtleitelement (11, 111) aus Kunststoff besteht.

6. Handgeführtes Arbeitsgerät nach Anspruch 5,
**dadurch gekennzeichnet, dass** das Lichtleitelement (11, 111) aus faserverstärktem Kunststoff ist, wobei der Kunststoff zwischen 30 Gew.-% und 40 Gew.-% Fasern umfasst.

7. Handgeführtes Arbeitsgerät nach Anspruch 5 oder 6,
**dadurch gekennzeichnet, dass** dem Kunststoff weniger als 0,1 Gew.-% Farbpigmente zugemischt sind.

8. Handgeführtes Arbeitsgerät nach einem der Ansprüche 1 bis 7,
**dadurch gekennzeichnet, dass** der Motorträger (3) eine Außenwand (6) besitzt, und dass das Lichtleitelement (11, 111) Teil der Außenwand (6) des Motorträgers (3) ist.

9. Handgeführtes Arbeitsgerät nach Anspruch 8,
**dadurch gekennzeichnet, dass** sich das Lichtleitelement (11, 111) zumindest über einen Teil der Wandstärke (d) der Außenwand (6) des Motorträgers (3) erstreckt.

10. Handgeführtes Arbeitsgerät nach Anspruch 9,
**dadurch gekennzeichnet, dass** sich das Lichtleitelement (11, 111) über die gesamte Wandstärke (d) der Außenwand (6) des Motorträgers (3) erstreckt.

11. Handgeführtes Arbeitsgerät nach einem der Ansprüche 1 bis 10,
**dadurch gekennzeichnet, dass** der Motorträger (3) eine äußere Oberfläche (7) aufweist, und dass das Lichtleitelement (111) sich über mindestens 5%, insbesondere 20%, der Oberfläche (7) erstreckt.

12. Handgeführtes Arbeitsgerät nach einem der Ansprüche 1 bis 11,
**dadurch gekennzeichnet, dass** das Lichtleitelement (111) den gesamten Motorträger (3) umfasst.

13. Handgeführtes Arbeitsgerät nach einem der Ansprüche 1 bis 12,
**dadurch gekennzeichnet, dass** der Betriebsmitteltank (4, 14) ein Öltank ist.

14. Handgeführtes Arbeitsgerät nach einem der Ansprüche 1 bis 12,
**dadurch gekennzeichnet, dass** der Betriebsmitteltank (4, 14) ein Kraftstofftank ist.

15. Handgeführtes Arbeitsgerät nach den Ansprüchen 13 und 14,
**dadurch gekennzeichnet, dass** das Arbeitsgerät eine Motorkettensäge ist, und dass das Arbeitsgerät (1, 101) sowohl den Öltank als auch den Kraftstofftank umfasst.

16. Handgeführtes Arbeitsgerät nach Anspruch 15,
**dadurch gekennzeichnet, dass** das Lichtleitelement (11, 111) des Öltanks und das Lichtleitelement (11, 111) des Kraftstofftanks durch ein einziges Bauteil gebildet sind.

17. Handgeführtes Arbeitsgerät nach einem der Ansprüche 1 bis 16,
**dadurch gekennzeichnet, dass** das handgeführte Arbeitsgerät (1, 101) ein Werkzeug aufweist, und dass der Motorträger (3) das Werkzeug trägt.

## Claims

1. Hand-held tool comprising a drive motor (2), an operating-medium tank (4, 14) and a motor carrier (3), on which the drive motor (2) is held, the operating-medium tank (4, 14) having a first housing portion (21) and a second housing portion (22), the first housing portion (21) being formed integrally with the motor carrier (3), at least part of the second housing portion (22) being formed from light-transmitting material to allow the fill level of the operating-medium tank (4, 14) to be seen, wherein the motor carrier (3) has a light-transmitting light-conducting element (11, 111) for conducting light into the operating-medium tank (4, 14),
**characterised in that** the light-conducting element (111) includes the entire first housing portion (21) of the operating-medium tank (4, 14).

2. Hand-held tool according to claim 1,
**characterised in that** the first housing portion (21) of the operating-medium tank (4, 14) is at least partially covered by an opaque element (23) of the tool (1, 101).

3. Hand-held tool according to claim 1 or claim 2,
**characterised in that** the entire second housing portion (22) of the operating-medium tank (4, 14) is formed from light-transmitting material.

4. Hand-held tool according to one of claims 1 to 3,
**characterised in that** the light-conducting element (11, 111) is translucent.

5. Hand-held tool according to one of claims 1 to 4,
**characterised in that** the light-conducting element (11, 111) consists of plastic.

6. Hand-held tool according to claim 5,
**characterised in that** the light-conducting element (11, 111) is made from fibre-reinforced plastic, the plastic comprising between 30% by weight and 40% by weight fibres.

7. Hand-held tool according to claim 5 or 6,
**characterised in that** less than 0.1% by weight colour pigments are mixed with the plastic.

8. Hand-held tool according to one of claims 1 to 7,
**characterised in that** the motor carrier (3) has an exterior wall (6), and the light-conducting element (11, 111) is part of the exterior wall (6) of the motor carrier (3).

9. Hand-held tool according to claim 8,
**characterised in that** the light-conducting element (11, 111) extends over at least part of the wall thickness (d) of the exterior wall (6) of the motor carrier (3).

10. Hand-held tool according to claim 9,
**characterised in that** the light-conducting element (11, 111) extends over the entire wall thickness (d) of the exterior wall (6) of the motor carrier (3).

11. Hand-held tool according to one of claims 1 to 10,
**characterised in that** the motor carrier (3) has an outer surface (7), and the light-conducting element (111) extends over at least 5%, in particular 20%, of the surface (7).

12. Hand-held tool according to one of claims 1 to 11,
**characterised in that** the light-conducting element (111) comprises the entire motor carrier (3).

13. Hand-held tool according to one of claims 1 to 12,
**characterised in that** the operating-medium tank (4, 14) is an oil tank.

14. Hand-held tool according to one of claims 1 to 12,
**characterised in that** the operating-medium tank (4, 14) is a fuel tank.

15. Hand-held tool according to claims 13 and 14,
**characterised in that** the tool is a motorised chain saw, and the tool (1, 101) comprises both the oil tank and also the fuel tank.

16. Hand-held tool according to claim 15,
**characterised in that** the light-conducting element (11, 111) of the oil tank and the light-conducting element (11, 111) of the fuel tank are formed by a single component.

17. Hand-held tool according to one of claims 1 to 16,
**characterised in that** the hand-held tool (1, 101) has a work implement, and the motor carrier (3) carries the work implement.

## Revendications

1. Appareil de travail à main comprenant un moteur d'entraînement (2), un réservoir de fluide moteur (4, 14) et un support de moteur (3) auquel le moteur d'entraînement (2) est fixé, dans lequel le réservoir de ressource (4, 14) comporte une première section de carter (21) et une deuxième section de carter (22), dans lequel la première section de carter (21) est formée d'un seul tenant avec le support de moteur (3), dans lequel une partie au moins de la deuxième section de carter (22), pour détecter le niveau de remplissage du réservoir de ressource (4, 14), est formée de matériau translucide, dans lequel le support de moteur (3) comporte un élément conducteur de lumière laissant passer la lumière (11, 111) pour conduire la lumière dans le réservoir de ressource (4, 14),
**caractérisé en ce que** l'élément conducteur de lumière (111) comprend toute la première section de carter (21) du réservoir de ressource (4, 14).

2. Appareil de travail à main selon la revendication 1,
**caractérisé en ce que** la première section de carter (21) du réservoir de ressource (4, 14) est au moins partiellement couverte par un élément ne laissant pas passer la lumière (23) de l'appareil de travail (1, 101).

3. Appareil de travail à main selon la revendication 1 ou la revendication 2,
**caractérisé en ce que** toute la deuxième section de carter (22) du réservoir de ressource (4, 14) est formée de matériau laissant passer la lumière.

4. Appareil de travail à main selon l'une des revendications 1 à 3,
**caractérisé en ce que** l'élément conducteur de lumière (11, 111) est translucide.

5. Appareil de travail à main selon l'une des revendications 1 à 4,
**caractérisé en ce que** l'élément conducteur de lumière (11, 111) se compose de matière plastique.

6. Appareil de travail à main selon la revendication 5,
**caractérisé en ce que** l'élément conducteur de lumière (11, 111) est en matière plastique renforcée par fibres, dans lequel la matière plastique comprend entre 30% en poids et 40% en poids de fibres.

7. Appareil de travail à main selon la revendication 5 ou 6,
**caractérisé en ce qu'**à la matière plastique est mélangé moins de 0,1% en poids de pigments colorés.

8. Appareil de travail à main selon l'une des revendications 1 à 7,
**caractérisé en ce que** le support de moteur (3) a une paroi extérieure (6) et **en ce que** l'élément conducteur de lumière (11, 111) fait partie de la paroi extérieure (6) du support de moteur (3).

9. Appareil de travail à main selon la revendication 8,
**caractérisé en ce que** l'élément conducteur de lumière (11, 111) s'étend sur une partie au moins de l'épaisseur de paroi (d) de la paroi extérieure (6) du support de moteur (3).

10. Appareil de travail à main selon la revendication 9,
**caractérisé en ce que** l'élément conducteur de lumière (11, 111) s'étend sur toute l'épaisseur de paroi (d) de la paroi extérieure (6) du support de moteur (3).

11. Appareil de travail à main selon l'une des revendications 1 à 10,
**caractérisé en ce que** le support de moteur (3) comporte une surface extérieure (7) et **en ce que** l'élément conducteur de lumière (111) s'étend sur au moins 5%, en particulier 20%, de la surface (7).

12. Appareil de travail à main selon l'une des revendications 1 à 11,
**caractérisé en ce que** l'élément conducteur de lumière (111) entoure tout le support de moteur (3).

13. Appareil de travail à main selon l'une des revendications 1 à 12,
**caractérisé en ce que** le réservoir de ressource (4, 14) est un réservoir d'huile.

14. Appareil de travail à main selon l'une des revendications 1 à 12,
**caractérisé en ce que** le réservoir de ressource (4, 14) est un réservoir de carburant.

15. Appareil de travail à main selon les revendications 13 à 14,
**caractérisé en ce que** l'appareil de travail est une tronçonneuse à chaîne, et **en ce que** l'appareil de travail (1, 101) comprend aussi bien le réservoir d'huile que le réservoir de carburant.

16. Appareil de travail à main selon la revendication 15,
**caractérisé en ce que** l'élément conducteur de lumière (11, 111) du réservoir d'huile et l'élément conducteur de lumière (11, 111) du réservoir de carburant sont formés par un seul composant.

17. Appareil de travail à main selon l'une des revendications 1 à 16,
**caractérisé en ce que** l'appareil de travail à main (1, 101) comporte un outil et **en ce que** le support de moteur (3) porte l'outil.
